# EUROPEAN PATENT APPLICATION

(11) **EP 3 112 151 A1**
(43) Date of publication of application: **04.01.2017**
(21) Application number: 15755190.4
(22) Date of filing: 06.02.2015
(51) Int. Cl.: B32B 27/32, C09J 7/02, C09J 123/04

(54) **SURFACE PROTECTION FILM FOR HEATING PROCESS**

(30) Priority: 28.02.2014 JP 2014038210
(71) Applicant: Toray Advanced Film Co., Ltd., Chuo-ku Tokyo 103-0021 (JP)
(72) Inventor: TOYOSHIMA, YUTAKA, Nakatsugawa-shi Gifu 509-9132 (JP); OZEKI, KAZUNORI, Nakatsugawa-shi Gifu 509-9132 (JP); TASAKI, TATSUYUKI, Nakatsugawa-shi Gifu 509-9132 (JP); TOKUMARU, MIYUKI, Nakatsugawa-shi Gifu 509-9132 (JP)
(74) Representative: Kador & Partner
(86) International application number: PCT/JP2015/053378
(87) International publication number: WO 2015/129426

(57) **Abstract**

The purpose of the present invention is to provide a surface protection film that satisfies handling properties represented by anti-blocking properties, and various and numerous workability properties, including, favorable heat resistance and cutting properties, and the like. Provided is a surface protection film for a heating process, characterized by being formed from a compound form in which an adhesive layer (A), an intermediate layer (C), and a back layer (3) are layered in that order, the (A) layer comprising a polyethylene-based resin (a1) and a tackifier (a2) or an elastomer (a3), the (B) layer and the (C) layer each comprising a polypropylene-based resin (b) and a polypropylene-based resin (c), and the difference |ρ_{C} -ρ_{A}| between the density (ρ_{C}) of the (C) layer resin composition and the density (ρ_{A}) of the (A) layer resin composition and the difference |ρ_{C} - ρ_{B}| between the density (ρ_{C}) of the (C) layer resin composition and the density (ρ_{B}) of the (B) layer resin composition each being 0.020 g/cm³ or less.

## Description

### Technical Field

The present invention relates to a surface protective film for heat processing in which a surface of an adherend such as metal plate and resin plate provided with the film is subjected to processing including a heating step, and particularly relates to a surface protective film for heat processing that is characterized by not suffering an increase in tackiness during processing steps such as printing and heat-molding performed for an adherend carrying the film, not undergoing the phenomenon called tunneling, that is, tunnel-like lifting of the film, during processing or the phenomenon called curling, that is, rolling-up of the adherend on the surface protective film side even when the adherend is very thin, and being able to adhere an adherend stably.

### Background Art

Such surface protective films should be able to maintain an appropriate degree of tackiness to resist a variety of use conditions while also maintaining a low degree of tackiness to allow the film to be removed easily when the surface protection function becomes no long necessary. It is also important for surface protective films not to contaminate the adherend and not to leave vestiges on the adherend.

Specifically, these films may be subjected to high-temperature processing steps such as printing, drying, and heat-molding or other various processing steps such as punching, drawing, cutting, and polishing after sticking to an adherend, and accordingly, they should be high in processability for these steps. Specifically, they should be able to protect surfaces of various resin plates serving as components when used as optical films for hard-coated touch screens or when applied to manufacturing of nameplates on home appliances, automobile meters, suites cases, helmets, and dummy cans, and should not be liable to curling and tunneling when exposed to high-temperature heat in various steps such as printing, drying, and molding. Large curling has often occurred and caused problems such as damage to adherends as a result of curling of parts during transport and deterioration in positioning accuracy in printing and painting steps. In other cases, tunneling occurred occasionally, leaving tunneling vestiges on adherend surfaces.

On the other hand, surface protective films are normally supplied in the form of rolls, and therefore, it is important for them to maintain high slippage and high blocking resistance between the tacky layer and the back face of film to ensure smooth winding-off from the roll and also required to be high in workability for sticking to an adherend.

To prevent an increase in tackiness in high temperature processing of surface protective films, there have been a large number of proposals of using a ethylene/α-olefin copolymer as tacky layer material (Patent documents 1, 2, and 3), but they suffered problems such as insufficiency in handleability-related properties including slip properties and blocking resistance, insufficiency in heat resistance, and fusion bonding between film's back surfaces.

To provide a surface protective film that can be wound off more easily, there have been proposals of, for example, adding inorganic particles to the thermoplastic resin constituting the base layer (Patent document 4), though they suffer problems of damage to the adherend caused by the inorganic particles.

There is a proposal (Patent document 5) to use an outer layer of polypropylene based resin, a base layer of crystalline polypropylene, and a tacky layer of amorphous α-olefin based polymer and crystalline polypropylene based polymer with the aim of providing a protective film that is so high in heat resistance and also so high in blocking resistance as to free of lifting and peeling from an adherend or causing curling of the adherend when exposed to a high temperature environment after sticking to the adherend.

As described above, however, if all layers are formed of propylene based polymers, not only blocking may occur, but also larger costs will be required compared to the use of polyethylene based polymers, and in the case of the tacky layer, furthermore, larger amounts of adhesive or copolymerization components may be required compared to the use of polyethylene based polymers, possibly leading to problems from an economic viewpoint.

### Prior Art Documents

### Patent Documents

Patent document 1: Japanese Unexamined Patent Publication (Kokai) No. HEI 3-47886
Patent document 2: Japanese Unexamined Patent Publication (Kokai) No. HEI 4-55488
Patent document 3: Japanese Unexamined Patent Publication (Kokai) No. HEI 8-323942
Patent document 4: Japanese Unexamined Patent Publication (Kokai) No. SHO 55-165974
Patent document 5: Japanese Unexamined Patent Publication (Kokai) No. 2008-68564

### Summary of the Invention

### Problems to be Solved by the Invention

An object of the present invention is to provide a surface protective film that is high in heat resistance, free of an increase in tackiness during heating and heat-molding steps performed after sticking to an adherend, and also free of tunneling due to linear expansion or curling due to heat shrinkage.

### Means of Solving the Problems

The above object of the present invention is met by the invention described below.

Specifically, the present invention provides a surface protective film for heat processing that includes three layers, namely, a tacky layer (A), interlayer (C), and back layer (B) that are laminated in this order to form a composite structure, the layer (A) containing a low density polyethylene based resin (a1) and a tackifier (a2) or an elastomer (a3), the layer (B) and the layer (C) containing a polypropylene based resin composition (b) and a polypropylene based resin composition (c), respectively, the difference |ρ_{C}-ρ_{A}| between the density ρ_{C} of the resin composition in the layer (C) and the density ρ_{A} of the resin composition in the layer (A) and the difference |ρ_{C}-ρ_{B}| between the density ρ_{C} of the resin composition in the layer (C) and the density ρ_{B} of the resin composition in the layer (B) both being 0.020 g/cm³ or less.

A preferred embodiment of this invention provides a surface protective film for heat processing as described above, wherein the low density polyethylene based resin (a1) contains one or more resins selected from the group consisting of ethylene/α-olefin copolymers and high-pressure, low density polyethylene resins.

Another embodiment provides a surface protective film for heat processing as described above, wherein the layer (A) contains a low density polyethylene based resin (a1) and a tackifier (a2) and the tackifier (a2) contains at least one selected from the group consisting of polyterpene based resins, rosin based resins, and petroleum based resins.

Another embodiment provides a surface protective film for heat processing as described above, wherein the layer (A) contains a low density polyethylene based resin (a1) and an elastomer (a3) and the elastomer (a3) is a styrene based thermoplastic elastomer.
Another embodiment provides a surface protective film for heat processing as described above, wherein the polypropylene based resin (c) in the layer (C) is an ethylene/propylene/butene copolymer.

Another embodiment provides a surface protective film for heat processing as described above, wherein the thickness of the layer (A) accounts for 20% to 35% and the thickness of the layer (B) accounts for 5% to 15% of the total thickness of the film.

Another embodiment provides a surface protective film for heat processing as described above, wherein a 100 µm thick biaxially stretched polyethylene terephthalate film to which the tacky layer (A) side surface thereof is attached does not undergo a bend with a height of 10 mm or more when being left at 90°C for 15 minutes.

### Advantageous Effect of the Invention

The present invention can provide, with a high reproducibility, a surface protective film for heat processing that is able to solve the above problems, free from suffering an increase in tackiness during processing steps such as printing and heat-molding performed after sticking to an adherend when used for lamination to cover surfaces of metal plates, resin plates, etc., and free from undergoing tunneling or curling, ensuring stable adhesion to adherends.

### Description of Preferred Embodiments

The present invention will be described more in detail below.

The present invention provides a surface protective film for heat processing aiming to meet the objectives of depressing the likely increase in tackiness at high temperatures as described above, ensuring stable contact with an adherend without undergoing tunneling or curling in processing steps such as printing and heat molding, and having good handleability-related properties (surface characteristics) such as blocking resistance. Curling and tunneling are considered to be attributable to a difference in shrinkage rate due to the difference in linear expansion coefficient between the adherend and the surface protective film in a heating step or the difference in linear expansion coefficient between the two surfaces of the surface protective film. The behaviors of the linear expansion coefficients of the two surfaces of the surface protective film are largely influenced by the degree of crystallinity and orientation during the film production process and depend largely on the type and density of the materials selected. For the present invention, all problems including curling and tunneling are solved by the adoption of a composite structure formed of a specific tacky layer, interlayer, and back layer as described below.

First, the protective film according to the present invention is composed mainly of three layers, namely, a tacky layer (A), an interlayer (C), and a back layer (B), laminated in this order to form a composite structure. When melt-extrusion is performed for film production, unstable parts formed in the initial period of the film production process and edge parts with non-uniform film thickness are commonly removed, but if this three-layer structure is adopted, the removed parts can be recycled into the interlayer, which leads to reduction in quantities of input materials and is preferable from an economic viewpoint. In other words, this is advantageous because whereas recovered material can be mixed in the interlayer (C) to decrease the production cost, specified virgin materials can be used to form the tacky layer (A) and the back layer (B) to allow these surface layers to maintain stable characteristics.

In the next place, the tacky layer (A) according to the present invention meets the requirements described below.

The tacky layer (A) according to the present invention contains a low density polyethylene based resin (a1), and a tackifier (a2) or an elastomer (a3).

For the present invention, the low density polyethylene based resin (a1) is preferably a polyethylene based resin with a density ρ_{A} in the range of 0.900 to 0.930 g/cm³, and more specifically, it is preferably a straight-chain, low density polyethylene or high-pressure, low density polyethylene. An intended level of tackiness will not develop when using a medium density polyethylene or high density polyethylene with a ρ_{A} of more than 0.930 g/cm³.

For the present invention, the straight-chain, low density polyethylene is actually a copolymer of ethylene monomers and a small amount of α-olefin. There are no specific limitations on the type of the α-olefin used as comonomer to constitute the ethylene/α-olefin copolymer, but good examples include 1-butene, 1-hexene, 4-methylpentene-1, and 1-octene, of which 1-hexene and 4-methylpentene-1 are preferable to produce a highly tacky layer. Of these, particularly preferable examples include ethylene/4-methylpentene-1 copolymer and ethylene/1-hexene copolymer. With respect to the main melting point, those showing a peak in the range of 110°C to 130°C are preferable. Contamination of the adherend surface will be prevented easily if the main melting point peak is 110°C or more while it will be easy to maintain strong contact with the adherend stably, enabling coordinated deformation with the adherend during heat molding, if it is 130°C or less. The density and melting point depend on the conditions of short chain branching and the associated crystal state of the α-olefin. The structure factors of an ethylene/α-olefin copolymer include the type of short chain branching, degree of short chain branching, and composition distribution, as well as average molecular weight and molecular weight distribution, but the requirements for density and melting point can be met by adding the comonomer up to only 10 mol%. Although some ethylene/α-olefin copolymers show two or more melting point peaks, the main melting point peak determined from a differential scanning calorimetry (DSC) curve obtained using a differential scanning calorimeter is used for the present invention. An ethylene/α-olefin copolymer can be produced not only by a conventional multi-site catalyst based synthesis method, but also by a single-site catalyst (Kaminski catalyst, metallocene catalyst) based synthesis method. Both may serve for the present invention.

The above ethylene/α-olefin copolymers are generally lower in heat stability than other olefin resins such as polyethylene and therefore, it is preferable to add a thermal stabilizer such as antioxidant in an amount of 500 to 3,000 ppm when performing extrusion molding. It is desirable, however, to limit its use to a minimum necessary quantity because an excessive addition may cause contamination of the adherend. Useful antioxidants include phenol based, aromatic amine based, thioether based, and phosphorus based ones, and it is preferable to combine two or more of them to allow them to have good effect in small amounts. For example, the combined used of phenol based and phosphorus based ones is preferable.

As the low density polyethylene based resin (a1) for the present invention, a high-pressure, low density polyethylene may be used in combination with or instead of the aforementioned straight-chain, low density polyethylene. The high-pressure, low density polyethylene is a low density polyethylene that is polymerized under a high pressure of about 1,000 to 4,000 atm at 100°C to 350°C and preferably has a melting point in the range of 100°C to 130°C. As in the case of the aforementioned straight-chain, low density polyethylene, contamination of the adherend surface will be prevented easily if the melting point is 100°C or more while it will be easy to maintain strong contact with the adherend stably, enabling coordinated deformation with the adherend during heat molding, if it is 130°C or less.

For the present invention, the tackifier (a2) refers collectively to those materials that work to plasticize and tackify a polymer after being dispersed in the polymer and the available tackifiers include polyterpene based, rosin based, petroleum resin based, and coal resin based ones. The structural units of polyterpene include α-pinene, β-pinene, and dipentene, and hydrogenated products (hydrogenated terpene resin) may also be used. Usable modified products include terpene styrene resin and terpene phenol resin. Usable rosins include rosin, polymerized rosin, hydrogenated rosin, and modified rosin, and usable derivatives include glycerin esters and pentaerythritol esters of rosin or hydrogenated rosin. The petroleum resin based ones include petroleum based aliphatic hydrocarbon resins, petroleum based aromatic hydrocarbon resins, petroleum based aliphatic/aromatic copolymer type hydrocarbon resins, and petroleum based alicyclic hydrocarbon resin. Petroleum based alicyclic hydrocarbon resin may also be referred to as alicyclic petroleum resin. Coal resin based ones include coumarone-indene resin.

Examples of the elastomer (a3) to be used for the present invention include styrene based thermoplastic elastomers such as styrene/butadiene/styrene (SBS), styrene/isoprene/styrene (SIS), and styrene/ethylene/butylene/styrene (SEBS) block copolymers, and hydrogenated styrene/butadiene random copolymer (HSBR), as well as so-called ethylene/α-olefin copolymer elastomers that are amorphous or low in crystallinity, multicomponent (ternary etc.) copolymers, and other polyolefin elastomers.

There are no specific limitations on the tackifier (a2) and elastomer (a3), but for use in combination with the low density polyethylene based resin (a1), preferable tackifiers include terpene based resin, rosin based resin, and petroleum based resin and preferable elastomers include styrene based thermoplastic elastomers, from the viewpoint of preventing the contamination of adherends. Furthermore, these tackifiers and elastomers may be used singly or as a combination of two or more thereof. The tackifier (a2) and elastomer (a3) preferably account for 1 to 40 wt% in the tacky layer (A), though they may be used in appropriate amounts depending on the desired tackiness with the adherend. Contamination of adherend may occur if it is more than 40 wt% while a required level of tackiness may not be achieved if it is less than 1 wt%.

In the next place, it is important for the back layer (B) according to the present invention to be formed mainly of a polypropylene based resin (b). The use of polypropylene based resin in the back layer (B) serves to depress the shrinkage of the back layer after heating and depress curling and tunneling. Examples of the polypropylene based resin (b) include homopolypropylene, random or block copolymers of ethylene and propylene, and ternary copolymers (so-called terpolymer, ethylene/propylene/butene copolymers) of ethylene, butane, and propylene, and in particular, propylene based resins with a melting point of 145°C to 165°C are preferable from the viewpoint of not only heat resistance, but also slip properties, film handleability, and scratch resistance. When an ethylene/propylene copolymer is used, the ethylene content is preferably in the range of 1 to 7 mol%.

Fine particles of inorganic compounds or the like are generally added to a back layer to develop slip properties, but for the present invention, the use of the aforementioned back layer works to develop good slip properties and blocking resistance without adding inorganic particles or the like, thus serving to prevent damage to the adherend by inorganic particles. It is preferable for the back layer to have a thickness of 1 µm or more and less than 20 µm. The surface can easily develop a moderate roughness and blocking resistance if the thickness is 1 µm or more while curling can be depressed easily if it is less than 20 µm.

The back layer (B) for the present invention, which is configured to have such a structure as described above, preferably has a center line average roughness (Ra) of 0.1 to 0.30 µm on the surface while the tacky layer preferably has a center line average roughness (Ra) of 0.05 to 0.20 µm on the surface. Such smooth surfaces serve to maintain both stable tackiness and high film handleability. The surface roughness can be determined by analyzing a roughness profile (roughness curve) taken using a common type surface profile measuring machine.

In the next place, major examples of the polypropylene based resin (c) used to constitute the interlayer (C) of the present invention include propylene based resins such as homopolypropylene, ethylene/propylene random copolymers, ethylene/propylene block copolymers, and ethylene/propylene/butene copolymers, of which ethylene/propylene/butene copolymers, that is, so-called terpolymers, are preferable because they do not undergo significant variations in pressure when subjected to melt-extrusion. In particular, those propylene based resins with a melting point in the range of 140°C to 165°C can work well from the viewpoint of heat resistance, and those in the range of 145°C to 155°C are preferable from the viewpoint of stability during film production. With respect to the density, those with a density in the range of 0.895 to 0.905 g/cm³ are widely available. The use of a polypropylene based resin (c) in the interlayer (C) serves to depress the shrinkage of the back layer after heating and depress curling and tunneling.

The polypropylene based resin (c) may be one resin used singly or a combination of two or more resins mixed together, and may be mixed with other olefin based resins including, for example, high-pressure, low density polyethylene, straight-chain, low density polyethylene, and medium density polyethylene.

For the surface protective film according to the present invention, the polypropylene based resin (c) that constitutes the interlayer (C) may contain or is mixed with resin materials recovered from the tacky layer and the back layer as described above as long as they meet the density requirements described later. In general, when a film is produced by co-melt-extrusion, edge portions with non-uniform thickness are cut off and removed in, for instance, a slitting step, but the use of these portions as material for the interlayer (C) is a preferable practice because the feedstock consumption can be reduced. The amount of the material to be added or mixed in should be such that does not have significant influence on the physical properties, and it is preferable for the content of the polypropylene based resin added is not less than 70 wt%. The phenomenon of tunneling may occur easily if the content of the polypropylene based resin is less than 70 wt%.

Here, a filler, lubricant, antioxidant, ultraviolet absorber, pigment, antistatic agent, and nucleating agent, as well as other additives such as talc, stearate amide, and calcium stearate may be added appropriately to the interlayer (C) unless they cause deterioration in physical properties. These may be added singly, or two or more may be used in combination.

The composite structure referred to for the present invention is as described below.

The surface protective film for heat processing according to the present invention is a three-layer laminate film for which at least the relation in terms of the densities of the constituent resin compositions between the tacky layer (A) and the interlayer (C) and that between the back layer (B) and the interlayer (C) meet the requirements described below.

Both the difference |ρ_{C}-ρ_{A}| between the density (ρ_{C}) of the resin composition in the interlayer layer (C) and the density (ρ_{A}) of the resin composition in the tacky layer (A) and the difference |ρ_{C}-ρ_{B}| between the density (ρ_{C}) of the resin composition in the interlayer (C) and the density (ρ_{B}) of the resin composition in the back layer (B) should be 0.020 g/cm³ or less. If either of the density differences |ρ_{C}-ρ_{A}| and |ρ_{C}-ρ_{B}| is more than 0.020 g/cm³, an adherend to which the film is attached may suffer curling to deteriorate the handleability or tunneling to cause uneven printing, contamination of the adherend by tunneling vestiges, etc., when heated at high temperatures, e.g., at 80°C to 100°C for 15 minutes in a printing step.

Here, the densities refer to those of the mixed resin compositions in the layers. If a measurement is available, then it is adopted, but if no measurements are available for the density of a mixed resin, it is calculated from the density of each resin based on their proportions in the mixed resin. For example, the density [ρ] of a mixed resin is calculated by the equation [ρ] = 1/(X/[ρ1]+Y/[ρ2]+Z/[ρ3]) where [ρ1], [ρ2], and [ρ3] represent the densities of the resin (1), resin (2), and resin (3), respectively, and X, Y, and Z represent their proportions (X+Y+Z=1).

It is inferred, as described above, that not only the polypropylene based resins (b) and (c) in the back layer (B) and the interlayer (C) work more effectively to improve the heat resistance than polyethylene based resins, but also a smaller density difference between the layers leads to a smaller difference in linear expansion coefficient between the layers, thereby resulting in depressed curling and tunneling.

Described below is the production method for the surface protective film according to the present invention.

There are no specific limitations on the production method to be used for the surface protective film for heat processing according to the present invention, and available ones include a method in which a polypropylene based resin (b) adopted as the back layer resin composition, a resin composition composed of a straight-chain, low density polyethylene (a1) and/or a high-pressure, low density polyethylene and tackifier (a2), or an elastomer (a3) adopted as the tacky layer resin composition, and a polypropylene based resin (c), preferably an ethylene/propylene/butene copolymer, adopted as the interlayer resin composition are separately melt-extruded from different extruders and integrated into a laminate in the nozzle to achieve so-called three-layer co-extrusion to form a laminate composed of a tacky layer (A), interlayer (C), and back layer (B) stacked in this order, followed by winding to provide a roll of surface protective film, and a method in which a back layer, interlayer, and tacky layer are melt-extruded separately and then combined into a laminate by a lamination technique. Generally known methods such as blow-extrusion and T-die extrusion may be used for the former, while dry lamination, T-die melt-extrusion, or extrusion lamination may be used for the latter, and in particular, T-die co-melt-extrusion is preferable from the viewpoint of achieving high thickness accuracy and surface profile control, as well as high quality and low cost.

Here, when the layers are combined and laminated in the nozzle to produce a laminate film by three-layer co-melt-extrusion, it is preferable from the viewpoint of depressing the curling of the film that the tacky layer is brought into contact with the cast drum while maintaining the cast drum temperature below 40°C for cooling, followed by winding.

Depending on the adherend's thickness and the adherend's required quality level, the surface protective film according to the present invention normally has a thickness controlled in the range of 20 to 100 µm from the viewpoint of moldability and handleability.
Here, with respect to the thickness proportions of the tacky layer (A), interlayer (C), and back layer (B), the thickness proportion of the tacky layer (A) in the total thickness of the film is preferably in the range of 20% to 35% while the thickness proportion of the back layer (B) is preferably in the range of 5% to 15%, and the thickness proportion of the tacky layer (A) is more preferably in the range of 20% to 30% while the thickness proportion of the back layer (B) is more preferably in the range of 5% to 10%, from the viewpoint of curling. I n particular, the back layer (B) should have a thickness of 5% or more to develop blocking resistance easily.

### Examples

The present invention will now be illustrated with reference to Examples, but it should be understood that the invention is not construed as being limited thereto. The methods used for measurement and evaluation for various physical properties are as described below.

### (1) MFR

Using a melt indexer manufactured by Toyo Seiki Seisaku-sho, Ltd. according to JIS K7210-1997, measurements were taken at a temperature of 230°C and a load of 21.6 kg/cm² for polypropylene based resin and at a temperature of 190°C and a load of 21.6 kg/cm² for polyethylene based resin and ethylene/methyl methacrylate. All measurements are represented in grams per 10 minutes.

### (2) Blocking resistance

Evaluations were made based on whether crunchy peeling sounds are heard when film is wound off from a sample roll.
○: Peeling sound does not occur (not suffering blocking)
× : Peeling sound occurs (suffering blocking)

### (3) Attaching of specimens

A specimen stored and conditioned for 24 hours under the conditions of a temperature of 23°C and a humidity of 50% RH was attached to an adherend under an attaching pressure of 9,100 N/m at an attaching speed of 300 cm/min using a roll press (Special Press Roller, manufactured by Yasuda Seiki Seisakusho Ltd.). Subsequently, the specimen was stored for 24 hours under the conditions of a temperature of 23°C and a humidity of 50% RH and then subjected to various measurements and evaluations.

### (4) Initial tackiness

After storage in an atmosphere at 23°C for three days or more after preparation, the specimen was attached to a 500 µm thick polycarbonate sheet (with a thickness of 500 µm, Panlite PC1151, manufactured by Teijin Chemicals Ltd.) under the attaching conditions described in section (3), stored at an atmosphere at 23°C for 24 hours, and then subjected to tackiness measurement using a tensile tester (Tensilon universal tester manufactured by Orientec Co., Ltd.) at a tension speed of 300 mm/min and a peeling angle of 180°.

### (5) Increase in tackiness

A film-attached specimen prepared as in section (3) was stored in an atmosphere at 90°C for 30 minutes, further stored in an atmosphere at 23°C for 24 hours, and subjected to tackiness measurement according to the method described in section (3), followed by calculating the ratio to the initial tackiness. A specimen with a tackiness of 80% or more and less than 200% was judged as acceptable.

### (6) Curling

A specimen stored in an atmosphere at 23°C for three days or more after preparation was attached to a 100 µm thick, double-sided adhesive polyethylene terephthalate film (Cosmoshine A4300, manufactured by Toyobo Co., Ltd.), cut to 150 mm × 150 mm, stored for 15 minutes in an oven maintained at 90°C, allowed to cool at a temperature of 23°C for 3 hours, and placed on a flat plate, followed by determining the average curling height of the four corners from the flat plate. A specimen with an average height of less than 10 mm was judged as acceptable.

### (7) Tunneling

A sample film was attached to a 100 µm sheet of the aforementioned polyethylene terephthalate film used as adherend under the attaching conditions described in section (3), cut to 150 mm × 150 mm, stored for 15 minutes in an oven maintained at 90°C, allowed to cool at a temperature of 23°C for 3 hours, followed by visual observation of the tunneling of the adherend carrying the sample film. A decision was made as follows.

### Criterion

○: Suffering no tunneling
Δ: Suffering a small degree of tunneling (5 or more tunnels only in areas with a width of 10 mm or less from each edge)
× : Suffering tunneling (tunneling found over the entire surface)

### (8) Thickness ratio

A film is cut to expose a cross section and the thickness of each layer is measured with a digital microscope manufactured by Keyence Corporation at a magnification of x300, followed by calculating their ratio.

### (Example 1)

The constituent resin of each layer was prepared as follows.

The following resin composition was used for the tacky layer (A).
- Straight-chain, low density polyethylene (ethylene/4-methylpentene-1 copolymer, containing a phenolic antioxidant and a phosphorus-based antioxidant) with a density of 0.919 g/cm³, melting point of 120°C, MFR at 190°C of 2.0 g/10 min; 70 wt%
- High-pressure, low density polyethylene with a density of 0.924 g/cm³, melting point of 120°C, MFRat 190°C of 5.0 g/10 min; 10 wt%
- Terpene based tackifier master batch (composed of 20 wt% of terpene hydrocarbon resin and 80 wt% of straight-chain, low density polyethylene (ethylene/1-hexene copolymer)) with a density of 0.923 g/cm³, melting point of 119°C, and MFRat 190°C of 2.4 g/10 min; 20 wt% A resin composition of the following components was mixed uniformly in a Henschel mixer and used for the back layer (B).
- Ethylene/propylene/butene copolymer (ethylene content 1.1 wt%, butene content 4.2 wt%) with a density of 0.900 g/cm³, melting point of 147°C, MFR at 190°C of 7.3 g/10 min; 80 wt%
- Ethylene/propylene random copolymer with a density of 0.900 g/cm³, melting point of 143°C, and MFRat 230°C of 30 g/10 min; 15 wt%
- High-pressure, low density polyethylene with a density of 0.915 g/cm³ and MFR at 230°C of 4.0 g/10 min; 5 wt%

The following resin composition was used for the interlayer (C).
- The same ethylene/propylene/butene copolymer as used for the back layer (B) ; 80 wt%
- The same straight-chain, low density polyethylene (ethylene/4-methylpentene-1 copolymer, containing a phenolic antioxidant and a phosphorus-based antioxidant) as used for the tacky layer (A); 20 wt%

Using a T-die composite film production machine with a nozzle width of 2,400 mm having three extruders each with a diameter of 90 mm (for tacky layer(A)), a diameter of 65 mm (for back layer (B)), or a diameter of 115 mm (for interlayer (C)), the resin compositions prepared above were fed separately to the extruders while the discharge rate of each extruder was adjusted so that the tacky layer thickness proportion, the back layer thickness proportion, and the interlayer thickness proportion would be 25%, 8%, and 67%, respectively, and then they were extruded through the composite T-die at an extrusion temperature of 230°C, quenched on a cast drum at a temperature of 30°C, and wound up to form a roll, thus providing a three-layer laminate film with a film thickness of 50 µm.

Then, the film wound up in a roll was fed to a slitting machine to provide a film sample wound up in a roll with a width of 1,000 mm and a length of 2,000 m.

The density of each layer was calculated using the formula described above. The tacky layer resin composition had a density of 0.920 g/cm³; the back layer resin composition had a density of 0.901 g/cm³; and the interlayer resin composition had a density of 0.904 g/cm³. Accordingly, the density difference |ρ_{C}-ρ_{A}| was 0.016 g/cm³ and the density difference |ρ_{C}-ρ_{B}| was 0.003 g/cm³.

### (Example 2)

Except that the 20 wt% quantity of the terpene based tackifier master batch used for the tacky layer in Example 1 was replaced with 15 wt% of a rosin based tackifier master batch (composed of 20 wt% of rosin ester resin and 80 wt% of straight-chain, low density polyethylene (ethylene/1-hexene copolymer), and having a density of 0.921 g/cm³, melting point of 120°C, and MFR at 190°C of 3.2 g/10 min) and that the straight-chain, low density polyethylene (ethylene/4-methylpentene-1 copolymer, containing a phenolic antioxidant and a phosphorus-based antioxidant) was used in an amount of 75 wt%, the same procedure as in Example 1 was carried out to produce a three-layer laminate film with a thickness of 50 µm.

The density of each layer was as follows: the tacky layer resin composition had a density of 0.920 g/cm³; the back layer resin composition had a density of 0.901 g/cm³; and the interlayer resin composition had a density of 0.904 g/cm³. Accordingly, the density difference |ρ_{C}-ρ_{A}| was 0.016 g/cm³ and the density difference |ρ_{C}-ρ_{B}| was 0.003 g/cm³.

### (Example 3)

Except that the rosin based tackifier master batch used for the tacky layer in Example 2 was replaced with an alicyclic petroleum resin based tackifier master batch (composed of 20 wt% of petroleum based alicyclic hydrocarbon resin and 80 wt% of straight-chain, low density polyethylene (ethylene/4-methylpentene-1 copolymer, containing a phenolic antioxidant and a phosphorus-based antioxidant), and having a density of 0.916 g/cm³, melting point of 122°C, and MFR at 190°C of 3.8 g/10 min), the same procedure as in Example 2 was carried out to produce a three-layer laminate film with a thickness of 50 µm.

The density of each layer was as follows: the tacky layer resin composition had a density of 0.919 g/cm³; the back layer resin composition had a density of 0.901 g/cm³; and the interlayer resin composition had a density of 0.904 g/cm³. Accordingly, the density difference |ρ_{C}-ρ_{A}| was 0.015 g/cm³ and the density difference |ρ_{C}-ρ_{B}| was 0.003 g/cm³.

### (Example 4)

Except that 80 wt% of straight-chain, low density polyethylene (ethylene/4-methylpentene-1 copolymer, containing a phenolic antioxidant and a phosphorus-based antioxidant) and 20 wt% of a hydrogenated styrene/butadiene random copolymer (styrene 10 wt%) with a density of 0.890 g/cm³ were used for the tacky layer in Example 1, the same procedure as in Example 1 was carried out to produce a three-layer laminate film with a thickness of 50 µm.

The density of each layer was as follows: the tacky layer resin composition had a density of 0.913 g/cm³; the back layer resin composition had a density of 0.901 g/cm³; and the interlayer resin composition had a density of 0.904 g/cm³. Accordingly, the density difference |ρ_{C}-ρ_{A}| was 0.009 g/cm³ and the density difference |ρ_{C}-ρ_{B}| was 0.003 g/cm³.

### (Example 5)

Except that 75 wt% of straight-chain, low density polyethylene (ethylene/4-methylpentene-1 copolymer, containing a phenolic antioxidant and a phosphorus-based antioxidant) and 25 wt% of a styrene/ethylene/butylene/styrene block copolymer with a density of 0.890 g/cm³ were used for the tacky layer in Example 1, the same procedure as in Example 1 was carried out to produce a three-layer laminate film with a thickness of 50 µm.

The density of each layer was as follows: the tacky layer resin composition had a density of 0.912 g/cm³; the back layer resin composition had a density of 0.901 g/cm³; and the interlayer resin composition had a density of 0.904 g/cm³. Accordingly, the density difference |ρ_{C}-ρ_{A}| was 0.008 g/cm³ and the density difference |ρ_{C}-ρ_{B}| was 0.003 g/cm³.

### (Example 6)

Except that the straight-chain, low density polyethylene (ethylene/4-methyl pentene-1 copolymer, containing a phenolic antioxidant and a phosphorus-based antioxidant) was replaced with a straight-chain, low density polyethylene (ethylene/1-hexene copolymer) with a density of 0.922 g/cm³, melting point of 117°C, MFR at 190°C of 5.0 g/10 min in the tacky layer and the interlayer in Example 4, the same procedure as in Example 4 was carried out to produce a three-layer laminate film with a thickness of 50 µm.

The density of each layer was as follows: the tacky layer resin composition had a density of 0.915 g/cm³; the back layer resin composition had a density of 0.901 g/cm³; and the interlayer resin composition had a density of 0.904 g/cm³. Accordingly, the density difference |ρ_{C}-ρ_{A}| was 0.011 g/cm³ and the density difference |ρ_{C}-ρ_{B}| was 0.003 g/cm³.

### (Example 7)

Except that the straight-chain, low density polyethylene (ethylene/4-methyl pentene-1 copolymer, containing a phenolic antioxidant and a phosphorus-based antioxidant) was replaced with a straight-chain, low density polyethylene (ethylene/1-hexene copolymer) with a density of 0.910 g/cm³, melting point of 98°C, MFR at 190°C of 5.0 g/10 min in the tacky layer and the interlayer in Example 4, the same procedure as in Example 4 was carried out to produce a three-layer laminate film with a thickness of 50 µm. The density of each layer was as follows: the tacky layer resin composition had a density of 0.906 g/cm³; the back layer resin composition had a density of 0.901 g/cm³; and the interlayer resin composition had a density of 0.902 g/cm³. Accordingly, the density difference |ρ_{C}-ρ_{A}| was 0.004 g/cm³ and the density difference |ρ_{C}-ρ_{B}| was 0.001 g/cm³.

### (Example 8)

Except that the straight-chain, low density polyethylene (ethylene/4-methylpentene-1 copolymer, containing a phenolic antioxidant and a phosphorus-based antioxidant) was replaced with high-pressure, low density polyethylene with a density of 0.924 g/cm³, melting point of 111°C, and MFR at 190°C of 5.8 g/10 min in the tacky layer and the interlayer in Example 4, the same procedure as in Example 4 was carried out to produce a three-layer laminate film with a thickness of 50 µm.

The density of each layer was as follows: the tacky layer resin composition had a density of 0.917 g/cm³; the back layer resin composition had a density of 0.901 g/cm³; and the interlayer resin composition had a density of 0.905 g/cm³. Accordingly, the density difference |ρ_{C}-ρ_{A}| was 0.012 g/cm³ and the density difference |ρ_{C}-ρ_{B}| was 0.004 g/cm³.

### (Example 9)

Except that a resin composition composed of 85 wt% of an ethylene/propylene/butene copolymer and 15 wt% of an ethylene/propylene copolymer with a density of 0.900 g/cm³, melting point of 143°C, and a MFR at 230°C of 30 g/10 min was used for the back layer in Example 6, the same procedure as in Example 6 was carried out to produce a three-layer laminate film with a thickness of 70 µm.

The density of each layer was as follows: the tacky layer resin composition had a density of 0.915 g/cm³; the back layer resin composition had a density of 0.900 g/cm³; and the interlayer resin composition had a density of 0.904 g/cm³. Accordingly, the density difference |ρ_{C}-ρ_{A}| was 0.011 g/cm³ and the density difference |ρ_{C}-ρ_{B}| was 0.004 g/cm³.

### (Example 10)

Except that 65 wt% of an ethylene/propylene/butene copolymer and 30 wt% of an ethylene/propylene random copolymer were used for the back layer in Example 6 and that adjustments were made so that the tacky layer thickness, the back layer thickness, and the interlayer thickness accounted for 20%, 5%, and 75%, respectively, the same procedure as in Example 6 was carried out to produce a three-layer laminate film with a thickness of 30 µm.

The density of each layer was as follows: the tacky layer resin composition had a density of 0.915 g/cm³; the back layer resin composition had a density of 0.901 g/cm³; and the interlayer resin composition had a density of 0.904 g/cm³. Accordingly, the density difference |ρ_{C}-ρ_{A}| was 0.011 g/cm³ and the density difference |ρ_{C}-ρ_{B}| was 0.003 g/cm³.

### (Example 11)

Except that 83 wt% of an ethylene/propylene/butene copolymer and 12 wt% of an ethylene/propylene random copolymer were used for the back layer in Example 6 and that adjustments were made so that the tacky layer thickness, the back layer thickness, and the interlayer thickness accounted for 30%, 10%, and 60%, respectively, the same procedure as in Example 6 was carried out to produce a three-layer laminate film with a thickness of 30 µm.

The density of each layer was as follows: the tacky layer resin composition had a density of 0.915 g/cm³; the back layer resin composition had a density of 0.901 g/cm³; and the interlayer resin composition had a density of 0.904 g/cm³. Accordingly, the density difference |ρ_{C}-ρ_{A}| was 0.011 g/cm³ and the density difference |ρ_{C}-ρ_{B}| was 0.003 g/cm³.

### (Comparative example 1)

Except that the ethylene/propylene/butene copolymer in the back layer resin in Example 1 was replaced with a high-pressure, low density polyethylene with a density of 0.923 g/cm³, melting point of 111°C, and a MFR at 190°C of 5.5 g/10 min and that the ethylene/propylene/butene copolymer in the interlayer resin was replaced with a high density polyethylene with a density of 0.961 g/cm³, melting point of 132°C, and a MFR at 190°C of 7.5 g/10 min, the same procedure as in Example 1 was carried out to produce a three-layer laminate film with a thickness of 50 µm.

The density of each layer was as follows: the tacky layer resin composition had a density of 0.920 g/cm³; the back layer resin composition had a density of 0.919 g/cm³; and the interlayer resin composition had a density of 0.952 g/cm³. Accordingly, the density difference |ρ_{C}-ρ_{A}| was 0.032 g/cm³ and the density difference |ρ_{C}-ρ_{B}| was 0.033 g/cm³.

### (Comparative example 2)

Except that the ethylene/propylene/butene copolymer in the back layer and the interlayer resin in Example 1 was replaced with a high-pressure, low density polyethylene with a density of 0.931 g/cm³, melting point of 118°C, and a MFR at 190°C of 5.0 g/10 min, the same procedure as in Example 1 was carried out to produce a three-layer laminate film with a thickness of 50 µm.

The density of each layer was as follows: the tacky layer resin composition had a density of 0.920 g/cm³; the back layer resin composition had a density of 0.925 g/cm³; and the interlayer resin composition had a density of 0.929 g/cm³. Accordingly, the density difference |ρ_{C}-ρ_{A}| was 0.009 g/cm³ and the density difference |ρ_{C}-ρ_{B}| was 0.004 g/cm³.

### (Comparative example 3)

Except that the ethylene/propylene/butene copolymer in the interlayer resin in Example 6 was replaced with a high density polyethylene with a density of 0.961 g/cm³, melting point of 132°C, and a MFR at 190°C of 7.5 g/10 min, that 70 wt% of an ethylene/1-hexene copolymer (straight-chain, low density polyethylene) and 30 wt% of a hydrogenated styrene/butadiene random copolymer (styrene 10 wt%) were used as the tacky layer resin, and that the thickness proportion of each layer was adjusted by controlling the discharge rate of each extruder so that the tacky layer thickness, the back layer thickness, and the interlayer thickness accounted for 15%, 8%, and 77%, respectively, the same procedure as in Example 6 was carried out to produce a three-layer laminate film with a thickness of 70 µm.

The density of each layer was as follows: the tacky layer resin composition had a density of 0.912 g/cm³; the back layer resin composition had a density of 0.901 g/cm³; and the interlayer resin composition had a density of 0.953 g/cm³. Accordingly, the density difference |ρ_{C}-ρ_{A}| was 0.041 g/cm³ and the density difference |ρ_{C}-ρ_{B}| was 0.052 g/cm³.

### (Comparative example 4)

Except that 80 wt% of an ethylene/1-hexene copolymer (straight-chain, low density polyethylene) and 20 wt% of a hydrogenated styrene/butadiene random copolymer (styrene 10 wt%) were used for the tacky layer resin in Comparative example 3 and that the discharge rate of each extruder was adjusted so that the tacky layer thickness, the back layer thickness, and the interlayer thickness accounted for 25%, 3%, and 72%, respectively, the same procedure as in Comparative example 3 was carried out to produce a three-layer laminate film with a thickness of 30 µm.

The density of each layer was as follows: the tacky layer resin composition had a density of 0.915 g/cm³; the back layer resin composition had a density of 0.901 g/cm³; and the interlayer resin composition had a density of 0.953 g/cm³. Accordingly, the density difference |ρ_{C}-ρ_{A}| was 0.038 g/cm³ and the density difference |ρ_{C}-ρ_{B}| was 0.052 g/cm³.

### (Comparative example 5)

Except that 80 wt% of an ethylene/vinyl acetate copolymer (vinyl acetate content 10 wt%) with a density of 0.930 g/cm³, melting point of 94°C, and a MFR at 190°C of 9.0 g/10 min and 20 wt% of the terpene based tackifier master batch used in Example 1 were used as tacky layer resin in Comparative example 3, that 20 wt% of the same ethylene/vinyl acetate copolymer used for the tacky layer was used as the interlayer resin instead of an ethylene/1-hexene copolymer, and that the discharge rate of each extruder was adjusted so that the tacky layer thickness, the back layer thickness, and the interlayer thickness accounted for 25%, 8%, and 67%, respectively, the same procedure as in Comparative example 3 was carried out to produce a three-layer laminate film with a thickness of 70 µm.

The density of each layer was as follows: the tacky layer resin composition had a density of 0.929 g/cm³; the back layer resin composition had a density of 0.901 g/cm³; and the interlayer resin composition had a density of 0.955 g/cm³. Accordingly, the density difference |ρ_{C}-ρ_{A}| was 0.026 g/cm³ and the density difference |ρ_{C}-ρ_{B}| was 0.054 g/cm³.

### (Comparative example 6)

Except that 60 wt% of an ethylene/propylene/butene copolymer with a density of 0.900 g/cm³, melting point of 147°C, and a MFR at 190°C of 7.3 g/10 min and 40 wt% of a high density polyethylene with a density of 0.961 g/cm³, melting point of 132°C, and a MFR at 230°C of 5.0 g/10 min were used for the interlayer resin in Comparative example 4 and that the discharge rate of each extruder was adjusted so that the tacky layer thickness, the back layer thickness, and the interlayer thickness accounted for 25%, 8%, and 67%, respectively, the same procedure as in Comparative example 4 was carried out to produce a three-layer laminate film with a thickness of 70 µm.

The density of each layer was as follows: the tacky layer resin composition had a density of 0.915 g/cm³; the back layer resin composition had a density of 0.901 g/cm³; and the interlayer resin composition had a density of 0.923 g/cm³. Accordingly, the density difference |ρ_{C}-ρ_{A}| was 0.008 g/cm³ and the density difference |ρ_{C}-ρ_{B}| was 0.022 g/cm³.

### (Comparative example 7)

Except that the high density polyethylene in the interlayer resin in Comparative example 5 was replaced with an ethylene/propylene/butene copolymer with a density of 0.900 g/cm³, melting point of 147°C, and a MFR at 190°C of 7.3 g/10 min, the same procedure as in Comparative example 5 was carried out to produce a three-layer laminate film with a thickness of 70 µm.

The density of each layer was as follows: the tacky layer resin composition had a density of 0.929 g/cm³; the back layer resin composition had a density of 0.901 g/cm³; and the interlayer resin composition had a density of 0.906 g/cm³. Accordingly, the density difference |ρ_{C}-ρ_{A}| was 0.023 g/cm³ and the density difference |ρ_{C}-ρ_{B}| was 0.005 g/cm³.

### (Comparative example 8)

Except that the high-pressure, low density polyethylene in the interlayer resin in Comparative example 2 was replaced with an ethylene/propylene/butene copolymer with a density of 0.900 g/cm³, melting point of 147°C, and a MFR at 190°C of 7.3 g/10 min, the same procedure as in Comparative example 2 was carried out to produce a three-layer laminate film with a thickness of 70 µm.

The density of each layer was as follows: the tacky layer resin composition had a density of 0.920 g/cm³; the back layer resin composition had a density of 0.925 g/cm³; and the interlayer resin composition had a density of 0.904 g/cm³. Accordingly, the density difference |ρ_{C}-ρ_{A}| was 0.016 g/cm³ and the density difference |ρ_{C}-ρ_{B}| was 0.021 g/cm³.

### (Evaluation of Samples)

The film samples prepared in the Examples and Comparative examples were evaluated according to the methods described above. Results are summarized in Tables 1 and 2.

**[Table 1-1-1]**

| | | | Density (g/cm³) | Example 1 | Example 2 | Example 3 | Example 4 | Example 5 | Example 6 |
|---|---|---|---|---|---|---|---|---|---|
| | (a1) | ethylene/4-methyl pentene-1 copolymer | 0.919 | 70% | 75% | 75% | 80% | 75% | |
| | | ethylene/1-hexene copolymer | 0.922 | | | | | | 80% |
| | | ethylene/1-hexene copolymer | 0.910 | | | | | | |
| | | high-pressure, low density polyethylene | 0.924 | 10% | 10% | 10% | | | |
| Tacky layer A | (a2) | terpene based tackifier master batch | 0.923 | 20% | | | | | |
| | | rosin based tackifier master batch | 0.921 | | 15% | | | | |
| | | alicyclic petroleum resin based tackifier master batch | 0.916 | | | 15% | | | |
| | (a3) | hydrogenated styrene/butadiene random copolymer | 0.890 | | | | 20% | | 20% |
| | | styrene/ethylene/butylene/styrene block copolymer | 0.890 | | | | | 25% | |
| | | ethylene/vinyl acetate copolymer | 0.930 | | | | | | |
| | (c) | ethylene/propylene/butene copolymer | 0.900 | 80% | 80% | 80% | 80% | 80% | 80% |
| | | ethylene/4-methyl pentene-1 copolymer | 0.919 | 20% | 20% | 20% | 20% | 20% | |
| | | ethylene/1-hexene copolymer | 0.922 | | | | | | 20% |
| Interlayer C | | ethylene/1-hexene copolymer | 0.910 | | | | | | |
| | | high density polyethylene | 0.961 | | | | | | |
| | | high-pressure, low density polyethylene | 0.924 | | | | | | |
| | | high-pressure, low density polyethylene | 0.931 | | | | | | |
| | | ethylene/vinyl acetate copolymer | 0.930 | | | | | | |
| | (b) | ethylene/propylene/butene copolymer | 0.900 | 80% | 80% | 80% | 80% | 80% | 80% |
| Back layer B | | ethylene/propylene copolymer | 0.900 | 15% | 15% | 15% | 15% | 15% | 15% |
| | | low density polyethylene | 0.915 | 5% | 5% | 5% | 5% | 5% | 5% |
| | | high-pressure, low density polyethylene | 0.923 | | | | | | |
| | | high-pressure, low density polyethylene | 0.931 | | | | | | |

**[Table 1-1-2]**

| | | Density (g/cm³) | Example 1 | Example 2 | Example 3 | Example 4 | Example 5 | Example 6 |
|---|---|---|---|---|---|---|---|---|
| Total thickness (µm) | | | 50 | 50 | 50 | 50 | 50 | 50 |
| Thickness ratio (tacky layer/back layer/interlayer) | | | 25/8/67 | 25/8/67 | 25/8/67 | 25/8/67 | 25/8/67 | 25/8/67 |
| Density | ρ_{A} (g/cm³) | | 0.920 | 0.920 | 0.919 | 0.913 | 0.912 | 0.915 |
| | ρ_{B} (g/cm³) | | 0.901 | 0.901 | 0.901 | 0.901 | 0.901 | 0.901 |
| | ρ_{C} (g/cm³) | | 0.904 | 0.904 | 0.904 | 0.904 | 0.904 | 0.904 |
| | density difference \|ρ_{C}-ρ_{A}\| (g/cm³) | | 0.016 | 0.016 | 0.015 | 0.009 | 0.008 | 0.011 |
| | density difference \|ρ_{C}-ρ_{B}\| (g/cm³) | | 0.003 | 0.003 | 0.003 | 0.003 | 0.003 | 0.003 |
| Evaluation | blocking resistance | | ○ | ○ | ○ | ○ | ○ | ○ |
| | initial tackiness (N/25 mm) | | 0.20 | 0.17 | 0.12 | 0.16 | 0.17 | 0.13 |
| | increase in tackiness (90°C, 30 min, vs. initial) | | 93% | 91% | 90% | 94% | 97% | 95% |
| | curling (90°C, 15 min) | | 5 mm | 6 mm | 7 mm | 5 mm | 3 mm | 7 mm |
| | tunneling (90°C, 15 min) | | ○ | ○ | ○ | ○ | ○ | ○ |

**[Table 1-2-1]**

| | | | Density (g/cm³) | Example 7 | Example 8 | Example 9 | Example 10 | Example 11 |
|---|---|---|---|---|---|---|---|---|
| | (a1) | ethylene/4-methyl pentene-1 copolymer | 0.919 | | | | | |
| | | ethylene/1-hexene copolymer | 0.922 | | | 80% | 80% | 80% |
| | | ethylene/1-hexene copolymer | 0.910 | 80% | | | | |
| | | high-pressure, low density polyethylene | 0.924 | | 80% | | | |
| Tacky layer A | (a2) | terpene based tackifier master batch | 0.923 | | | | | |
| | | rosin based tackifier master batch | 0.921 | | | | | |
| | | alicyclic petroleum resin based tackifier master batch | 0.916 | | | | | |
| | (a3) | hydrogenated styrene/butadiene random copolymer | 0.890 | 20% | 20% | 20% | 20% | 20% |
| | | styrene/ethylene/butylene/styrene block copolymer | 0.890 | | | | | |
| | | ethylene/vinyl acetate copolymer | 0.930 | | | | | |
| | (c) | ethylene/propylene/butene copolymer | 0.900 | 80% | 80% | 80% | 80% | 80% |
| | | ethylene/4-methyl pentene-1 copolymer | 0.919 | | | | | |
| | | ethylene/1-hexene copolymer | 0.922 | | | 20% | 20% | 20% |
| Interlayer C | | ethylene/1-hexene copolymer | 0.910 | 20% | | | | |
| | | high density polyethylene | 0.961 | | | | | |
| | | high-pressure, low density polyethylene | 0.924 | | 20% | | | |
| | | high-pressure, low density polyethylene | 0.931 | | | | | |
| | | ethylene/vinyl acetate copolymer | 0.930 | | | | | |
| Back layer B | (b) | ethylene/propylene/butene copolymer | 0.900 | 80% | 80% | 85% | 65% | 83% |
| | | ethylene/propylene copolymer | 0.900 | 15% | 15% | 15% | 30% | 12% |
| | | low density polyethylene | 0.915 | 5% | 5% | | 5% | 5% |
| | | high-pressure, low density polyethylene | 0.923 | | | | | |
| | | high-pressure, low density polyethylene | 0.931 | | | | | |

**[Table 1-2-2]**

| | | Density (g/cm³) | Example 7 | Example 8 | Example 9 | Example 10 | Example 11 |
|---|---|---|---|---|---|---|---|
| Total thickness (µm) | | | 50 | 50 | 70 | 30 | 30 |
| Thickness ratio (tacky layer/back layer/interlayer) | | | 25/8/67 | 25/8/67 | 25/8/67 | 20/5/75 | 30/10/60 |
| Density | ρ_{A} (g/cm³) | | 0.906 | 0.917 | 0.915 | 0.915 | 0.915 |
| | ρ_{B} (g/cm³) | | 0.901 | 0.901 | 0.900 | 0.901 | 0.901 |
| | ρ_{C} (g/cm³) | | 0.902 | 0.905 | 0.904 | 0.904 | 0.904 |
| | density difference \|ρ_{C}-ρ_{A}\| (g/cm³) | | 0.004 | 0.012 | 0.011 | 0.011 | 0.011 |
| | density difference \|ρ_{C}-ρ_{B}\| (g/cm³) | | 0.001 | 0.004 | 0.004 | 0.003 | 0.003 |
| Evaluation | blocking resistance | | ○ | ○ | ○ | ○ | ○ |
| | initial tackiness (N/25 mm) | | 0.18 | 0.10 | 0.14 | 0.10 | 0.16 |
| | increase in tackiness (90°C, 30 min, vs. initial) | | 95% | 92% | 96% | 92% | 94% |
| | curling (90°C, 15 min) | | 5 mm | 4 mm | 8 mm | 6 mm | 2 mm |
| | tunneling (90°C, 15 min) | | ○ | ○ | ○ | ○ | ○ |

**[Table 2-1]**

| | | | Density (g/cm³) | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|---|---|
| | (a1) | ethylene/4-methylpentene-1 copolymer | 0.919 | 70% | 70% | | | | | | 70% |
| | | ethylene/1-hexene copolymer | 0.922 | | | 70% | 80% | | 80.0% | | |
| | | ethylene/1-hexene copolymer | 0.910 | | | | | | | | |
| | | high-pressure, low density polyethylene | 0.924 | 10% | 10% | | | | | | 10% |
| Tacky layer A | (a2) | terpene based tackifier master batch | 0.923 | 20% | 20% | | | 20% | | 20% | 20% |
| | | rosin based tackifier master batch | 0.921 | | | | | | | | |
| | | alicyclic petroleum resin based tackifier master batch | 0.916 | | | | | | | | |
| | (a3) | hydrogenated styrene/butadiene random copolymer | 0.890 | | | 30% | 20% | | 20.0% | | |
| | | styrene/ethylene/butylene/styrene block copolymer | 0.890 | | | | | | | | |
| | | ethylene/vinyl acetate copolymer | 0.930 | | | | | 80% | | 80% | |
| | (c) | ethylene/propylene/butene copolymer | 0.900 | | | | | | 60% | 80% | 80% |
| | | ethylene/4-methylpentene-1 copolymer | 0.919 | 20% | 20% | | | | | | 20% |
| | | ethylene/1-hexene copolymer | 0.922 | | | 20% | 20% | | | | |
| Interlayer C | | ethylene/1-hexene copolymer | 0.910 | | | | | | | | |
| | | high density polyethylene | 0.961 | 80% | | 80% | 80% | 80% | 40% | | |
| | | high-pressure, low density polyethylene | 0.924 | | | | | | | | |
| | | high-pressure, low density polyethylene | 0.931 | | 80% | | | | | | |
| | | ethylene/vinyl acetate copolymer | 0.930 | | | | | 20% | | 20% | |
| Back layer B | (b) | ethylene/propylene/butene copolymer | 0.900 | | | 80% | 80% | 80% | 80% | 80% | |
| | | ethylene/propylene copolymer | 0.900 | 15% | 15% | 15% | 15% | 15% | 15% | 15% | 15% |
| | | low density polyethylene | 0.915 | 5% | 5% | 5% | 5% | 5% | 5% | 5% | 5% |
| | | high-pressure, low density polyethylene | 0.923 | 80% | | | | | | | |
| | | high-pressure, low density polyethylene | 0.931 | | 80% | | | | | | 80% |

**[Table 2-2]**

| | | Density (g/cm³) | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|---|
| Total thickness (µm) | | | 50 | 50 | 70 | 30 | 70 | 70 | 70 | 70 |
| Thickness ratio (Tacky layer/back layer/interlayer) | | | 25/8/67 | 25/8/67 | 15/8/77 | 25/3/72 | 25/8/67 | 25/8/67 | 25/8/67 | 25/8/67 |
| | ρ_{A} (g/cm³) | | 0.920 | 0.920 | 0.912 | 0.915 | 0.929 | 0.915 | 0.929 | 0.920 |
| | ρ_{B} (g/cm³) | | 0.919 | 0.925 | 0.901 | 0.901 | 0.901 | 0.901 | 0.901 | 0.925 |
| Density | ρ_{C} (g/cm³) | | 0.952 | 0.929 | 0.953 | 0.953 | 0.955 | 0.923 | 0.906 | 0.904 |
| | density difference \|ρ_{C}-ρ_{A}\| (g/cm³) | | 0.032 | 0.009 | 0.041 | 0.038 | 0.026 | 0.008 | 0.023 | 0.016 |
| | density difference \|ρ_{C}-ρ_{B}\| (g/cm³) | | 0.033 | 0.004 | 0.052 | 0.052 | 0.054 | 0.022 | 0.005 | 0.021 |
| | blocking resistance | | ○ | ○ | ○ | × | ○ | ○ | ○ | ○ |
| | initial tackiness (N/25 mm) | | 0.29 | 0.40 | 0.80 | 0.26 | 0.19 | 0.11 | 0.11 | 0.11 |
| Evaluation | increase in tackiness (90°C 30 min, vs. initial) | | 92% | 95% | 98% | 94% | 490% | 94% | 520% | 94% |
| | curling (90°C, 15 min) | | 7 mm | 8 mm | 18 mm | 16 mm | 10 mm | 11 mm | 12 mm | 13 mm |
| | tunneling (90°C, 15 min) | | × | Δ | × | × | × | Δ | Δ | × |

The results given in Table 1 show that the samples prepared in the Examples of the present invention are free of blocking, high in handleability, and high in heat resistance (low curling tendency, tunneling resistance). The results given in Table 2 show that tunneling is caused in Comparative example 1 and Comparative examples 3 to 8 in which there is a large density difference. Tunneling is also caused in Comparative example 2 in which polyethylene based material is used for the back layer and the interlayer resin, though the density difference is small.

A large curling tendency is present and deterioration in handleability is caused by heating in Comparative example 3, in which the tacky layer has a decreased thickness proportion, and in Comparative example 4, in which the back layer has a decreased thickness proportion. Deterioration in blocking resistance is also seen in Comparative example 4 as a result of a decrease in the back layer thickness.

The large tackiness is seen after heating, suggesting that tackiness increase is caused in Comparative examples 5 and 7 in which an ethylene/vinyl acetate copolymer is used as a tacky layer component.

### Industrial Applicability

The surface protection film according to the present invention can be used favorably as surface protection film not only for preventing contamination and flaws during processing and conveyance of synthetic resin plates, metal plates, coated steel plates, and various nameplates, but also for preventing surface contamination and flaws during processing and conveyance of various synthetic-resin-based optical film and optical-use resin plates widely used in recent years in thin-type displays such as liquid crystal displays. In particular, the film is highly suitable for use in roll-shape products in which the film is attached to only one side of a roll.

## Claims

1. A surface protective film for heat processing comprising three layers, namely, a tacky layer (A), interlayer (C), and back layer (B) that are laminated in this order to form a composite structure, the layer (A) containing a low density polyethylene based resin (a1) and a tackifier (a2) or an elastomer (a3), the layer (B) and the layer (C) containing a polypropylene based resin (b) and a polypropylene based resin (c), respectively, the difference |ρ_{C}-ρ_{A}| between the density ρ_{C} of the resin composition in the layer (C) and the density ρ_{A} of the resin composition in the layer (A) and the difference |ρ_{C}-ρ_{B}| between the density ρ_{C} of the resin composition in the layer (C) and the density p_{B} of the resin composition in the layer (B) both being 0.020 g/cm³ or less.

2. A surface protective film for heat processing as claimed in claim 1, wherein the low density polyethylene based resin (a1) in the layer (A) comprises one or more resins selected from the group consisting of straight-chain, low density polyethylene resins and high-pressure, low density polyethylene resins.

3. A surface protective film for heat processing as claimed in either claim 1 or 2, wherein the layer (A) comprises a low density polyethylene based resin (a1) and a tackifier (a2), the tackifier (a2) containing at least one selected from the group consisting of polyterpene based resins, rosin based resins, and petroleum based resins.

4. A surface protective film for heat processing as claimed in either claim 1 or 2, wherein the layer (A) comprises a low density polyethylene based resin (a1) and an elastomer (a3), the elastomer (a3) being a styrene based thermoplastic elastomer.

5. A surface protective film for heat processing as claimed in any one of claims 1 to 4, wherein the polypropylene based resin (c) in the layer (C) is an ethylene/propylene/butene copolymer.

6. A surface protective film for heat processing as claimed in any one of claims 1 to 5, wherein
the thickness of the layer (A) accounts for 20% to 35% and the thickness of the layer (B) accounts for 5% to 15% of the total thickness of the film.

7. A surface protective film for heat processing as claimed in any one of claims 1 to 6, wherein
a 100 µm thick biaxially stretched polyethylene terephthalate film to which the tacky layer (A) side surface thereof is attached does not undergo a bend with a height of 10 mm or more when being left at 90°C for 15 minutes.
